# EUROPEAN PATENT SPECIFICATION

(11) **EP 2 371 168 B1**
(45) Date of publication and mention of the grant of the patent: **28.08.2013**
(21) Application number: 08876333.9
(22) Date of filing: 29.12.2008
(51) Int. Cl.: H04W 52/02, H04W 88/08

(54) **METHOD AND BASE STATION FOR POWER SAVING**
VERFAHREN UND BASISSTATION ZUM STROMSPAREN
PROCÉDÉ ET STATION DE BASE POUR L'ÉCONOMIE D'ÉNERGIE

(43) Date of publication of application: 05.10.2011
(73) Proprietor: Unwired Planet, LLC, Reno, NV 89501 (US)
(72) Inventor: WAHLQVIST, Mattias, E-28806 Madrid (ES); PERSSON, Håkan, S-171 58 Solna (SE); BERGLUND, Bo, S-177 59 Järfälla (SE); ANDERSSON, Claes, S-115 26 Stockholm (SE); GÖRANSSON, Bo, S-191 38 Sollentuna (SE)
(74) Representative: McCann, Heather Alison
(86) International application number: PCT/SE2008/051567
(87) International publication number: WO 2010/077193

(56) References cited:
- WO-A1-02/07464
- WO-A2-98/26614
- US-B1- 6 347 226
- "3rd Generation Partnership Project; Technical Specification Group Radio Access Network; Evolved Universal Terrestrial Radio Access Network (E-UTRAN); X2 application protocol (X2AP) (Release 8)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 December 2008 (2008-12-01), pages 1-89, XP050377734,

## Description

### TECHNICAL FIELD

Embodiments herein refer to a base station and a method in a communications network, in particular, relating to power saving within the communications network.

### BACKGROUND

Saving electric power becomes of more importance in mobile networks. As data rates are increasing, the larger bandwidth implies increased power consumption for a base station. At the same time, operators are struggling with operational costs of the networks, in where the "electricity bill" is a non-negligible part of the operating expenses.

Saving electric power in a base station can be done in different ways, such as: making power saving optimizations in the base station implementation, introducing newer more power efficient components, or introducing functionality where the base station partly powers off during low traffic periods.

When introducing functionality to power off the base station or parts of the base station, decisions to power off/on is based on what is happening in the cells served by this particular base station.

Patent document WO 02/07464 A1, 24.01.2002, discloses a method for adaptive power management for a node of a cellular telecommunications network.

### SUMMARY

Embodiments are disclosed herein to provide an efficient and reliable manner to save power in a base station.

In some embodiments a method in a base station for determining a power mode for the base station to enter is disclosed. The base station determines cell load indicating user equipment activity within a first local cell of the base station and receives cell load information from a communication device comprising an indication of user equipment activity within a second cell associated to the communication device. The base station determines the power mode for the base station to enter based on the received cell load information and the determined load in the first local cell.

In order to perform the method a base station is provided. The base station comprises a control unit arranged to determine cell load in a first local cell associated to the base station indicating user equipment activity within the first local cell. Furthermore, the base station comprises a network interface arranged to receive cell load information from a communication device comprising an indication of user equipment activity within a second cell associated to the communication device. The control unit is further arranged to determine a power mode for the base station to enter, the base station serving the first local cell, based on the received cell load information and the determined load in the first local cell.

Examples herein disclose ways to make more intelligent decisions regarding the power mode in a base station resulting in a more efficient and reliable manner.

### BRIEF DESCRIPTION OF THE DRAWINGS

Embodiments will now be described in more detail in relation to the enclosed drawings, in which:
Figure 1 shows a schematic overview of a communications network,
Figure 2 shows a schematic overview of a combined method and signaling scheme in an Evolved Packet System, EPS, network,
Figure 3 shows an example of a combined method and signaling scheme of an EPS network,
Figure 4 shows a schematic overview of a Radio Access Network, RAN, in a Universal Mobile Telecommunications System, UMTS, network,
Figure 5 shows a schematic overview of an internode packet,
Figure 6 show an embodiment of a method in a first communication device,
Figure 7 shows a schematic overview of a method in a first communication device, and
Figure 8 shows a schematic overview of a first communication device.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

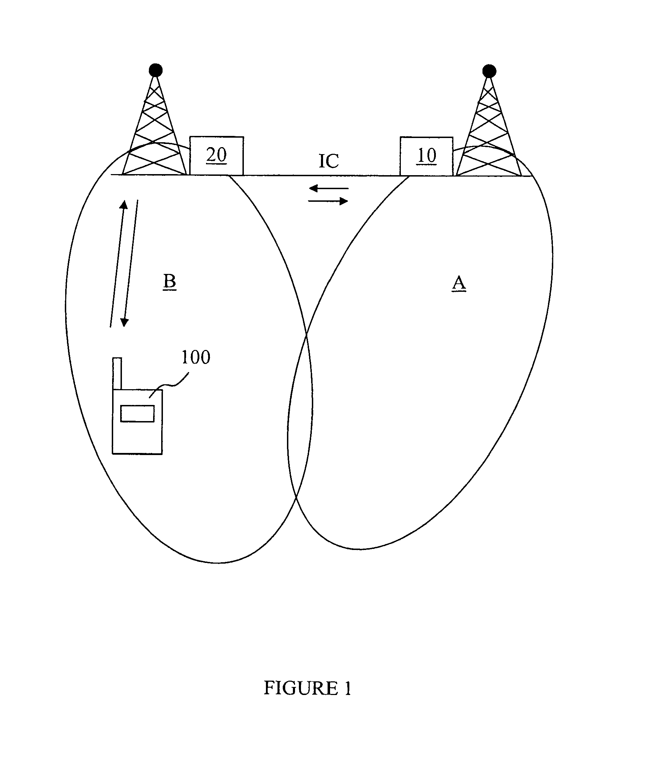

In figure 1, a schematic overview of a communications network is disclosed.

A first communication device 10, for example, a base station or the like, comprises a power saving function. A second communication device 20, for example, a base station, a controller node, and/or the like, comprises information of User Equipment (UE) 100 activity within a cell B. The second communication device 20 transmits cell load information indicating UE activity within the cell B over an Internode connection IC to the first communication device 10. This may be sent as a response to a request from a first communication device 10, but may also be information previously 'subscribed' to, i.e. data is sent by neighboring cells without needing a specific request all the time. It could also be information that is sent triggered when a specific event occurs.

The first communication device 10 receives the cell load information indicating UE activity in the cell B over the IC and analyses the information separately and/or in conjunction with local cell load information indicating UE activity in a local cell A controlled/served by the first communication device. Based on the analysis the first communication device 10 takes a power mode decision and sets itself up into the determined power mode. Hence, the first communication device determines what power mode to enter based on local and neighboring cell information. It should here be understood that the determined power mode may be sent to a base station comprising the cell A, if the decision is taken in a node controlling the base station of cell A.

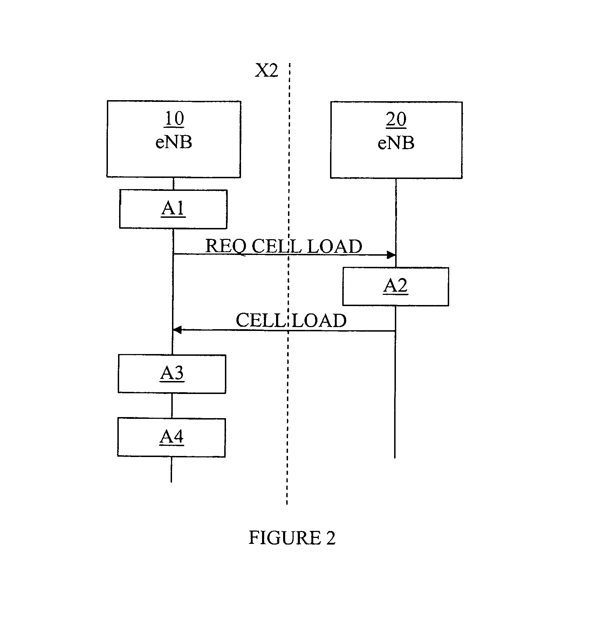

In figure 2, a schematic overview of a combined method and signaling scheme in an EPS network is shown.

In this example the Long Term Evolution, LTE, architecture is used as an example, but the idea may also apply for the 2G/3G RAN architecture or similar architectures.

A base station, enhanced Node B (eNB) 10, is designed so that it can enter one or several power modes, i.e. if the base station detects that some of its hardware is not needed (due to for example low traffic periods) it can be switched off in order to save power. There could be several different levels of power saving, in terms of which hardware that is powered off, but also the state of the specific hardware (for example: fully operational, hot standby, powered off).

In LTE neighbor base stations eNBs 10, 20 are connected by means of an X2 interface. This means that neighbor base stations eNB 10, eNB 20 may exchange signaling information over this connection.

In step A1, the eNB 10 determines the cell load of a local cell within the eNB 10 and requests the cell load of a neighbor cell, adjacent the local cell, of the eNB 20. The cell load comprises an indication of UE activity within the cell.

In step A2, the eNB 20 receives the request and determines the UE activity within the requested cell and transmits the cell load comprising an indication of the determined UE activity with the cell.

The signaling protocol X2, in the illustrated example, comprises information about current UE activity in a cell of the neighbor eNB 20. This means that the eNB 20 may inform its neighbor eNBs about current UE activity within a cell of the eNB 20. Examples of information to be conveyed:
- Number of currently active UEs (i.e. UEs that are currently actively transmitting or receiving data)
- Types of services being used (such as real-time/best-effort services)
- Total amount of sent/received data in the cell since last report
- Location of the UE (if available)
- Number of random accesses since last report (or Random Access Channel, RACH, load)
- Number of Non-Access Stratum, NAS, signaling messages that are passing through a cell
- Terminal type of UEs,
- Power mode of the eNB 20 indicating a certain level of UE activity within the cell of the eNB 20,
- Movement and direction information of UEs, information about speed and direction so if a UE is moving towards a cell with high speed it could be useful info to e.g. trigger a faster power-on. Speed may be known from vehicle speed and/or the like.

The reports may be sent periodically or on demand from the eNB 10/an Operation and Maintenance O&M node. Rules could be defined so that reports are sent under certain conditions , e.g. a report should always be sent when then number of active users goes from 0 to >0, and/or a report should be sent when number of active user goes down to 0.

In step A3, the eNB 10 receives the report and analyses the cell load indicating the UE activity of the neighbor cell separately or together with the determined local cell load indicating the UE activity of the local cell.

In step A4, the eNB 10 determines a power mode for the eNB 10 to enter based on the analysis and enters the determined power mode.

When receiving a report about the neighbor cells activity from one or more eNbs, the receiving base station eNB 10 could take a decision on how to perform power saving. The exact algorithm to do so may be manufacturer dependent, but examples could be:
- If there is no activity in all neighbor cells (typically in the middle of the night), and there are no active users in the own cells, power saving can be started.
- If there is no activity in a specific cell, and (by O&M configuration) the base station knows that this cell completely covers its own coverage area, the base station could be completely powered off (for example a macro cell covering several micro cells).
- If the base station is already in a power saving state, and receives information about activity in neighbor cells, selected parts of the base station can be powered up or put in "hot standby".

A change in power mode of the base station also may affect how auxiliary site equipment, such as air-condition, battery back-up system etc, is used. That is, the auxiliary site equipment can be controlled on the basis of the power consumption of the base station and also enter different power modes based on the power mode of the base station.

More advanced schemes may be envisioned, for example, by also weighting in handover statistics or information about the positions of the active UEs. Such information could be used to estimate the probability that the cell in question will need to take traffic in the close future. For example: if there is activity in a neighbor cell to which a cell frequently receives incoming handovers, it is likely that some UEs will be handed over in the future if there has been reported about activity in that neighbor cell.

To limit frequent changes between power-on and power-off states certain time limitations can be used. For example, a cell load may be determined over a preset time window.

The base station has little knowledge about the UEs in the area outside its own local cell/s coverage area. As a consequence, decisions to power off/power on have to be based on what is happening only in the cells served by this particular base station. But by making the base station aware of the UEs in the neighboring areas, more intelligent decisions can be made. As the base station is typically waiting for UEs to initiate activity (that may occur as a response to a message transmitted by the base station), a minimum set of equipment has always to be switched on, for example, to transmit broadcast information, and listening for UEs wanting to initiate communication. By making the base station aware of the UEs in the neighboring cells the level of power saving mode may be increased as the information underlying the decision is based on wider data making it more reliable. For example, if the base station knows that the activity in neighboring cells is very low as well as in its own cell/s the power required, for example, for listening for UEs and/or the like, may be reduced much more than if the information of the neighboring cell is not known.

It can also be envisioned that similar functionality could be conveyed via the O&M systems instead of the traffic interfaces, as here exemplified. UE activity would then be reported to the O&M system that takes care of distributing the relevant information to the particular cells neighbors.

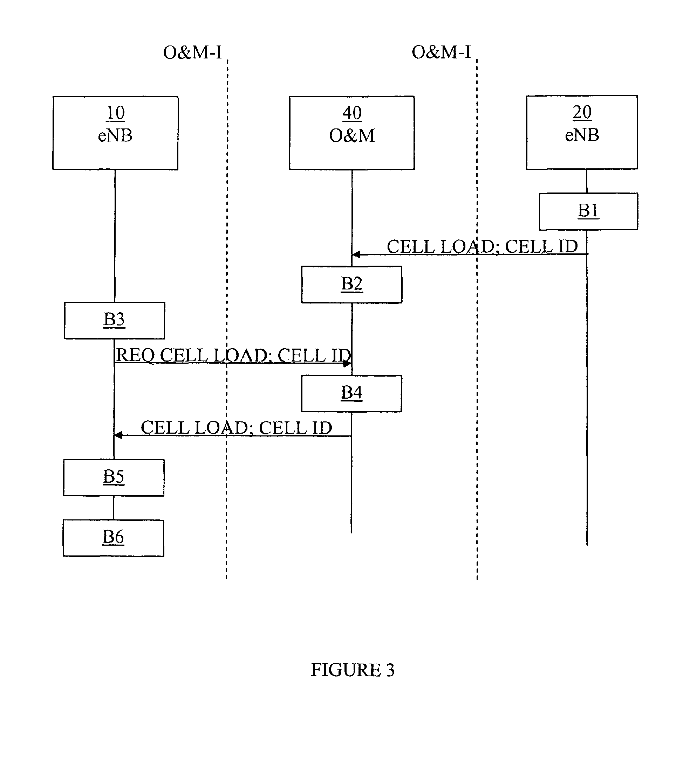

In figure 3, an example of a combined method and signaling scheme of an EPS network comprising an O&M node 40 is shown. A first base station eNB 10 and a second base station eNB 20 is connected to an O&M node 40 over O&M interfaces, O&M-I.

In step B1, the eNB 20 reports a cell load indicating UE activity in a local cell of the eNB 20. This may be triggered by an event such as there is no activity in the local cell and/or the like, may be reported periodically, and/or the like.

In step B2, the O&M node 40 stores the report.

In step B3, the eNB 10 determines the cell load indicating UE activity within a local cell of the eNB 10. As the cell load indicates a power mode change the eNB 10 requests a cell load of a neighbor cell from the O&M node 40, for example, if there is no UE activity in the local cell.

In step B4, the O&M node 40 receives the request and based on the cell ID of the requested cell in the request the O&M node 40 retrieves the stored cell load indicating the UE activity of the requested cell; the requested cell being the local cell of the eNB 20. The O&M node 40 then transmits the stored cell load of the requested cell in a report to the eNB 10.

In step B5, the eNB 10 receives the report and analyses the cell load indicating the UE activity in the neighbor cell separate or together with the cell load indicating the UE activity in the local cell and determines a power mode to enter/keep.

In step B6, the eNB 10 enters the determined power mode. It should also be understood that the eNB 10 may also send out an order to auxiliary equipment supporting the eNB 10 to enter a supporting power mode based on the entered power mode. For example, if power is reduced, that is "a change in power mode", this may also affect how the auxiliary site equipment is used. That is, the supporting equipment may be controlled on the basis of the power consumption of the base station.

In some embodiments, the changed power mode such as reduced power mode/ full power mode and/or the like is also transmitted to neighbouring eNBs providing knowledge for the eNB of power modes of neighbouring cells. This power mode report may in fact be used in order to determine power mode of the local base station. A power mode report may be considered as a report of a cell load indicating UE activity in a neighboring cell.

It should also be noted that in some embodiments the O&M node 40 receives reports of the cell load indicating the UE activity of different cells and may, based on the reports, determine a power mode for a certain base station to operate in. The O&M node 40 may then send out an order to the base stations/controller to enter certain power modes. That is, in some embodiments the determination is performed in the O&M node 40.

Although these examples are for the LTE architecture, similar information could be conveyed to the 2G/3G base stations. In this case it will be the Base Station Controller/Radio Network Controller BSC/RNC respectively that provides the Radio Base Station/NodeB RBS/NB with power mode information based on the load of the neighbor cells.

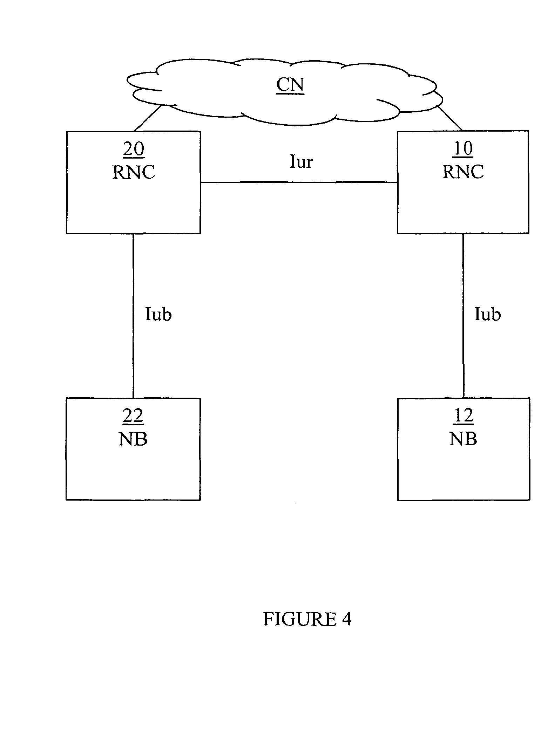

In figure 4, a schematic overview of a Radio Access Network, RAN, in an UMTS network is shown.

In the illustrated example, the RAN comprises a first base station NB 12 connected to a first Radio Network Controller RNC 10 over an lub Interface. Furthermore, the RAN comprises a second base station NB 22 connected to a second Radio Network Controller RNC 20 over an lub Interface. The first RNC 10 is connected over an lur Interface to the second RNC 20.

The second RNC 20 receives reports of cell load indicating UE activity in a cell of the second NB 22 from the second NB 22 and determines the cell load in the cell of the second NB 22.

The first RNC 10 receives reports from the first NB 12 and determines a cell load indicating the UE activity in a cell of the first NB 12. Then the first RNC 10 may request a cell load of the neighbor cell from the second NB 22. The request is sent to the second RNC 20 over the lur Interface. The second RNC 20 sends a report on the cell load indicating the UE activity in the cell of the second NB 22, being the neighbor cell of the cell of the first NB 12, to the first RNC 10 over the lur Interface.

Based on the received report from the second RNC 20 and the determined cell load indicating UE activity in the cell of the first NB 12, the first RNC 10 determines a power mode for the first NB 12. The first RNC 10 then transmits the determined power mode to the first NB 12 and the first NB 12 enters the power mode.

The technique may also be used across radio access networks, so that lack of traffic in one access technology is reported and acted upon in another. For example: In the night the operator may steer all traffic to LTE, and the 2G/3G networks are powered down to a minimum capacity configuration. In this case, signaling between access technologies may be done via the Core Network, CN, an O&M interface/proprietary interface, and/or the like.

Another option is to perform proprietary signaling between base stations of different access technologies that are located in the same base station site.

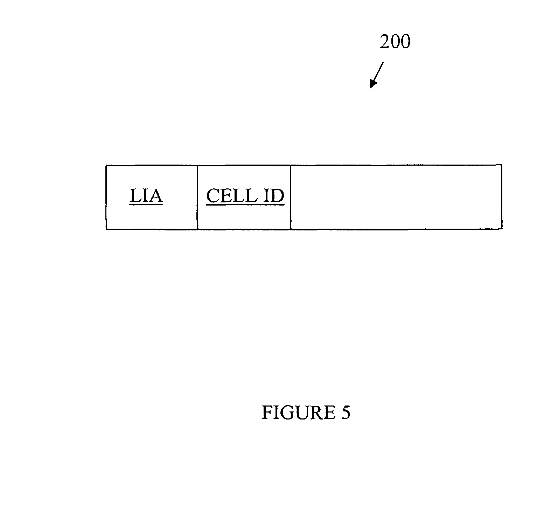

In figure 5, a schematic overview of an internode packet 200 of a signaling protocol is shown.

The internode packet comprises cell Load Information indicating user equipment Activity within a specific cell LIA. The specific cell may be identified by associating a cell ID, such as Cell Radio Network Temporary Identifier, C-RNTI, and/or the like, of the specific cell with the cell load information.

Hence, examples herein disclose an internode signalling protocol comprising data indicating an identity of a local cell served by a second communication device and cell load information indicating user equipment activity within the local cell. The cell load information is arranged to be used to determine a power mode of the base station and/or devices associated to the base station.

The internode signaling protocols may be X2 or S1 in LTE, lub/lur in WCDMA/HSPA, or Abis in GSM/EDGE.

Examples of information to be conveyed may be:
- Number of currently active UEs (i.e. UEs that are currently actively transmitting or receiving data)
- Types of services being used (such as real-time/best-effort services)
- Total amount of sent/received data in the cell since last report
- Location of the UE (if available)
- Number of random accesses since last report (or Random Access Channel, RACH, load)
- Number of NAS signaling messages that are passing through a cell
- Terminal type of UEs,
- Power mode of the base station serving the requested cell indicating a certain level of UE activity,
- Movement and direction information of UEs, information about speed and direction so if a UE is moving towards a cell with high speed it could be useful info to e.g. trigger a faster power-on. Speed may be known from vehicle speed and/or the like.

A base station signaling protocol is provided to be used to convey information indicating UE activity in a neighboring cell of a neighboring base station. This information is used by the receiving base station for taking decisions on power saving matters. The signaling protocols may, for example, be X2 or S1 in LTE, lub/lur in WCDMA/HSPA, and/or Abis in GSM/EDGE. For example, X2 carries interference information, handover information, and by adding cell load information indicating UE activity the receiving base station may take a more planned decision regarding what power mode to enter.

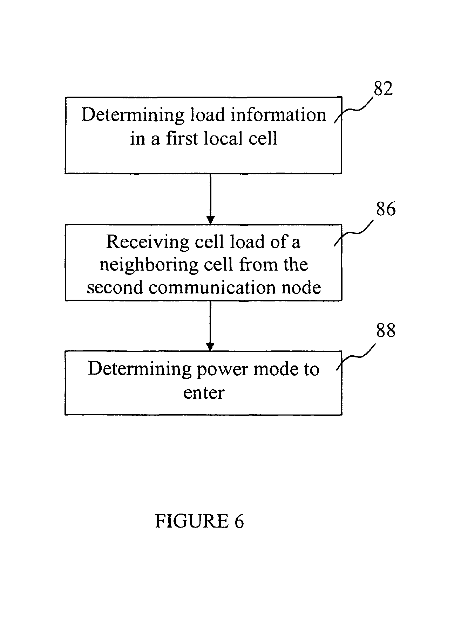

In figure 6, a schematic overview of a method in a first communication device is shown. The method is for determining a power mode for a base station to enter.

In step 82, the first communication device determines cell load indicating user equipment activity within a first local cell of the base station.

In step 86, the first communication device receives cell load information from a second communication device comprising an indication of user equipment activity within a second cell associated to the second communication device.

In step 88, the first communication device determines the power mode for the base station to enter based on the received cell load information and the determined load in the first local cell.

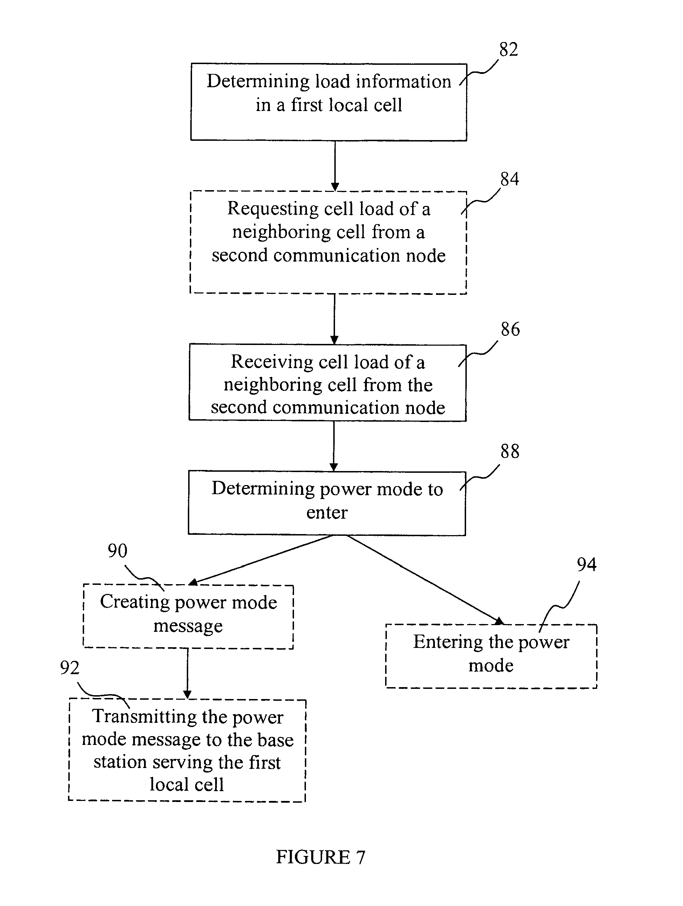

In figure 7, a schematic overview of a method in a first communication device is shown. The first communication device may comprise a RNC, BSC, eNB, O&M and/or the like.

In step 82, the first communication device determines cell load information in a first local cell of a base station. The cell load information indicates UE activity in the first local cell. In some embodiments, the first communication device comprises the base station and in some embodiments wherein the first communication device comprises a base station controller node, the cell load information, or parts of it, is retrieved/received from the base station serving the first base station over an interface such as lub and/or the like.

In optional step 84, the first communication device requests cell load of a neighboring second cell from a second communication device over the internode interface between the first and second communication device. The second communication device may be a RNC, BSC, eNB, O&M node and/or the like. This may be triggered when the determined cell load information in the first local cell load falls/exceeds a preset value indicating a certain level of UE activity in the local cell.

It should here be understood that the second communication device may request/receive user activity information from a base station serving the second cell in order to create cell load information to send as a response to the request from the first communication device.

In step 86, the first communication device receives cell load information from the second communication device comprising an indication of UE activity within the second cell associated to the second communication device. It should be understood that this information may previously been 'subscribed' to, i.e. data is sent by the second communication device without needing a specific request all the time. This information may also be information that is sent when triggered by a specific event such as when a cell load in a cell falls below a certain value indicating UE activity in the cell of the second communication device. It should be noted that the first communication device may receive cell load of a plurality of cells to take into account when determining power mode of the base station.

In some embodiments, the cell load information comprises; number of currently active user equipment, types of services being used, total amount of data being sent during a certain time window, locations of user equipments, number of Random Access operations during a certain time window, number of Non Access Stratum signalling messages passing through the cell during a certain time window, Terminal type of UEs, movement and direction information of UEs, and/or the like. The information may also be an activity report of present power mode of a neighbour base station implicitly indicating the UE activity in the neighbour cell.

In some embodiments, the second communication device also sends cell load information received from other communication devices to the first communication device. That is, the second communication device forwards cell load information. Thus, the first communication device may receive cell load information from a plurality of neighboring/adjacent cells.

In some embodiments, the first local cell and the second cell comprise different radio access technologies.

In step 88, the first communication device determines a power mode for the base station serving the first local cell to enter based on the received second cell load information and the determined cell load in the first local cell. It should here be understood that a plurality of cells from a plurality of base stations may be the base for the determination. The first communication device may perform the determination where the received second cell load is analysed separately or in conjunction with the determined cell load in the first local cell. For example, if a request to the second communication device is triggered when the first local cell has no UE activity, the first communication device need only to analyse the received second cell load to determine that a power mode. However, analysis may also be performed on the first local cell load and the second cell load.

In some embodiments, the first communication device determines a load value based on the received cell load information of the second cell and the determined load in the first local cell, wherein different ranges of the load value relates to different power modes.

In some embodiments, the first communication device also weight in other information such as handover statistics, and/or the like, when determining the power mode.

In optional step 90, the first communication device creates a message indicating the determined power mode and, as stated in an optional step 92, transmits the message to the base station serving the first local cell for the base station to enter the determined power mode. This may be the case when the determination of power mode is performed in a controller node or an O&M node controlling the base station.

In some embodiments, the received determined power mode order may trigger one or more internal orders in the base station to be created and transmitted out to auxiliary site equipment to change their power mode. Thus, the power mode of the auxiliary site equipment is based on the power mode of the base station.

Alternatively, in step 94, the first communication device may in some embodiments comprise the base station and enter the determined power mode.

It should also be noted that the determined power mode may be informed to other neighbouring base stations. These base stations may use this information in their turn to determine power mode of their own.

In some implementations, the functions/acts noted in the blocks above in the method may occur out of the order noted in the operational illustrations. For example, two blocks shown in succession may in fact be executed substantially concurrently or the blocks may sometimes be executed in the reverse order, depending upon the functionality/acts involved.

In order to perform the method a first communication device is provided. The first communication device may comprise a base station, a base station controller, a combination thereof, and/or the like.

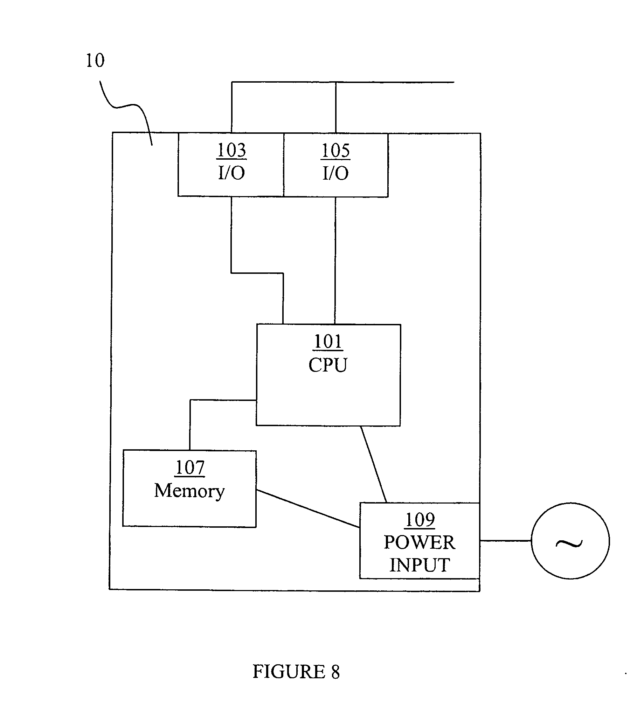

In figure 8, a schematic overview of a first communication device 10 is shown. The first communication device 10 comprises a control unit 101 arranged to determine cell load in a first local cell associated to the first communication device indicating user equipment activity within the first local cell. This information may be received/requested from a base station serving the first local cell.

The first communication device 10 comprises a network interface 103 arranged to receive cell load information from a second communication device comprising an indication of user equipment activity within a second cell associated to the second communication device.

The second communication device may in some embodiments comprise a base station such as a Base Station Transceiver BTS, NB, eNB, and/or the like. The second communication device may in some embodiments comprise a controller communication device such as a BSC, RNC, O&M, and/or the like, arranged to control/manage a base station.

In some embodiments, the first network interface 103 comprises an X2, lur, Abis interface and/or the like.

The indication may in some embodiments comprise; number of currently active user equipment, types of services being used, total amount of data being sent during a certain time window, locations of user equipments, number of Random Access operations during a certain time window, number of Non Access Stratum signalling messages passing through the cell during a certain time window, terminal type of UEs, movement and direction information of UEs, power mode of a base station serving the second cell based on UE activity within the second cell and/or the like.

The control unit 101 may further be arranged to request the cell load information from the second communication device over the first network interface 103. The cell load information from the second communication device may additionally or alternatively be sent to the first communication device from the second communication device, for example, if the information is subscribed to, periodically transmitted from the second communication device, or triggered when an event occurs at the second communication device.

The control unit 101 is further arranged to determine a power mode for a base station serving the first local cell to enter based on the received cell load information and the determined load in the first local cell. The control unit 101 may be arranged to perform the determination in separated steps and/or a combined step analysing the received cell load together/merged with the determined cell load.

In some embodiments, the control unit 101 is further arranged, in order to determine power mode to enter, to weight in other information, such as handover statistics, and/or the like.

In some embodiments, the control unit 101 is further arranged, in order to determine power mode to enter, to determine a load value based on the received cell information and the determined load in the first local cell, wherein different ranges of the load value defines different power modes in a list stored in a memory unit 107.

In some embodiments, the first communication device, such as an eNodeB, and/or the like, comprises the base station to power control. Thus, the control unit 101 is further arranged to enter the determined power mode, switching on/off different parts in the communication device according to determined power mode; settings of the different power modes are stored in a memory unit 107. The control unit may further be arranged to transmit an auxiliary power mode order to surrounding auxiliary equipment ordering the setting of surrounding equipment as well, such as air condition equipment, back-up battery equipment and/or the like, to a power mode based on the determined power mode.

In some embodiments, the first communication device comprises a network controller node such as a BSC, RNC, and/or the like, arranged to control the base station, or a controller node managing network nodes such as an O&M node. The control unit 101 may then further be arranged to create a message indicating the determined power mode, and to transmit the message over a second network interface 105 to a communication node serving the first local cell for the communication node to enter the determined power mode.

The second network interface 105 may comprise an lub, Abis interface and/or the like.

In some embodiments, the first local cell and the second cell comprise different radio access technologies. That is, the control unit determines power mode to enter for a base station based on the load of a cell of a first radio access technology, for example, Evolved Universal Terrestrial Radio Access Network, E-UTRAN, combined with a load of a cell of a second radio access technology; for example, UMTS Terrestrial Radio Access Network (UTRAN)/GSM/Edge Radio Access Network (GERAN).

The control unit 101 may comprise a CPU, a single processing unit, a plurality of processing units, and or the like.

The memory unit 107 may comprise a single memory unit, a plurality of memory units, external and/or internal memory units.

The first communication device and its components may be powered by and external power source connected to a power input 109 of the first communication. The first communication device may also be powered by an internal power source such as battery equipment and/or the like.

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation, the scope of the invention being defined by the following claims.

## Claims

1. A method in a base station (10) for determining a power mode for the base station to enter, comprising the steps of
- determining (82) cell load indicating user equipment activity within a first local cell of the base station (10), **characterized by**
- receiving (86) cell load information from a communication device comprising an indication of user equipment activity within a second cell associated to the communication device, and
- determining (88) the power mode for the base station (10) to enter based on the received cell load information and the determined load in the first local cell.

2. A method according to claim 1, wherein the step of determining power mode comprises to determine a load value based on the received cell load information of the second cell and the determined load in the first local cell, wherein different ranges of the load value relates to different power modes.

3. A method according to any of claims 1-2, wherein the indication comprises;
number of currently active user equipment, types of services being used,
total amount of data being sent during a certain time window, locations of user equipments, number of Random Access operations during a certain time window, number of Non Access Stratum signaling messages passing through the cell during a certain time window, terminal type of user equipment, movement and direction information of user equipment, power mode of a base station serving the second cell based on UE activity within the second cell and/or the like.

4. A method according to any of claims 1-3, wherein the step of determining power mode further comprises to weight in other information such as handover statistics, and/or the like.

5. A method according to any of claims 1-4, wherein the first local cell and the second cell comprise different radio access technologies.

6. A method according to any of the claims 1-5, further comprising the step of requesting (84) the cell load information from the communication device.

7. A method according to any of claims 1-6, further comprising the step of entering (94) the determined power mode.

8. A method according to claim 1-7, wherein the base station creates and transmits auxiliary power mode orders to auxiliary equipment supporting the base station, wherein the auxiliary power mode order is based on the determined power mode of the base station.

9. A base station (10) comprising a control unit (101) arranged to determine cell load in a first local cell associated to the base station (10) indicating user equipment activity within the first local cell, **characterized by** comprising a network interface (103) arranged to receive cell load information from a communication device comprising an indication of user equipment activity within a second cell associated to the communication device, wherein the control unit (101) is further arranged to determine a power mode for the base station (10) to enter, the base station (10) serving the first local cell, based on the received cell load information and the determined load in the first local cell.

10. A base station (10) according to claim 9, wherein the control unit (101) is further arranged, in order to determine power mode to enter, to determine a load value based on the received cell information and the determined load in the first local cell, wherein different ranges of the load value defines different power modes in a list stored in a memory unit (107).

11. A base station (10) according to any of the claims 9-10, wherein the indication comprises; number of currently active user equipment, types of services being used, total amount of data being sent during a certain time window, locations of user equipments, number of Random Access operations during a certain time window, number of Non Access Stratum signaling messages passing through the cell during a certain time window, terminal type of user equipment, movement and direction information of user equipment, power mode of a base station serving the second cell based on user equipment activity within the second cell, and/or the like.

12. A base station (10) according to any of the claims 9-11, wherein the control unit (101) is further arranged, in order to determine power mode to enter, to weight in other information, such as handover statistics, and/or the like.

13. A base station (10) according to any of the claims 9-12, wherein the first cell and the second cell comprise different radio access technologies.

14. A base station (10) according to any of claims 9-13, wherein the control unit (101) is furthermore arranged to create and transmit an auxiliary power mode order to auxiliary equipment supporting the base station stating an auxiliary power mode to enter based on the determined power mode.

15. A base station (10) according to any of the claims 9-14, wherein the control unit (101) is further arranged to enter the determined power mode, switching on/off different parts in the base station according to determined power mode, settings of the different power modes are stored in a memory unit (107).

16. A base station (10) according to any of claims 9-15, wherein the base station is an eNodeB, and/or he like.

17. A base station (10) according to any of claims 9-16, wherein the first network interface (103) comprises an X2, lur, Abis interface and/or the like.

18. A base station (10) according to any of claims 9-17, wherein the control unit (101) is further arranged to request the cell load information from the second communication device over the first network interface (103).

## Patentansprüche

1. Verfahren in einer Basisstation (10) zur Bestimmung eines Leistungsmodus, in den die Basisstation (10) eintreten soll, umfassend die folgenden Schritte:
- Bestimmen (82) von Zellauslastung, die Benutzereinrichtungsaktivität innerhalb einer ersten lokalen Zelle der Basisstation (10) anzeigt, **gekennzeichnet durch**:
- Empfangen (86) von Zellauslastungsinformationen von einer Kommunikationsvorrichtung, die eine Anzeige von Benutzereinrichtungsaktivität innerhalb einer zweiten Zelle umfassen, die mit der Kommunikationsvorrichtung verbunden ist, und
- Bestimmen (88) des Leistungsmodus, in den die Basisstation (10) eintreten soll, basierend auf den empfangenen Zellauslastungsinformationen und der bestimmten Auslastung in der ersten lokalen Zelle.

2. Verfahren nach Anspruch 1, wobei der Schritt des Bestimmens des Leistungsmodus ein Bestimmen eines Auslastungswerts basierend auf den empfangenen Zellauslastungsinformationen der zweiten Zelle und der bestimmten Auslastung in der ersten lokalen Zelle umfasst, wobei sich verschiedene Bereiche des Auslastungswerts auf verschiedene Leistungsmodi beziehen.

3. Verfahren nach einem der Ansprüche 1 bis 2, wobei die Anzeige umfasst:
Anzahl von gegenwärtig aktiven Benutzereinrichtungen, Typen von Diensten, die verwendet werden, Gesamtmenge von Daten, die während eines bestimmten Zeitfensters gesendet werden, Aufenthaltsorte von Benutzereinrichtungen, Anzahl von
Direktzugriffsvorgängen während eines bestimmten Zeitfensters, Anzahl von Nicht-Zugriffsschicht-Signalisierungsnachrichten, die während eines bestimmten Zeitfensters durch die Zelle laufen, Endgerätetyp von Benutzereinrichtungen, Bewegungs- und Richtungsinformationen von Benutzereinrichtungen,
Leistungsmodus einer Basisstation, welche die zweite Zelle versorgt, basierend auf UE-Aktivität innerhalb der zweiten Zelle und/oder dergleichen.

4. Verfahren nach einem der Ansprüche 1 bis 3, wobei der Schritt des Bestimmens des Leistungsmodus ferner ein Gewichten von anderen Informationen, wie beispielsweise Handover-Statistiken und/oder dergleichen, umfasst.

5. Verfahren nach einem der Ansprüche 1 bis 4, wobei die erste lokale Zelle und die zweite Zelle verschiedene Funkzugangstechnologien umfassen.

6. Verfahren nach einem der Ansprüche 1 bis 5, ferner umfassend den Schritt des Anforderns (84) der Zellauslastungsinformationen von der Kommunikationsvorrichtung.

7. Verfahren nach einem der Ansprüche 1 bis 6, ferner umfassend den Schritt des Eintretens (94) in den bestimmten Leistungsmodus.

8. Verfahren nach einem der Ansprüche 1 bis 7, wobei die Basisstation Hilfsleistungsmodusbefehle erstellt und an Hilfseinrichtungen sendet, welche die Basisstation unterstützen, wobei der Hilfsleistungsmodusbefehl auf dem bestimmten Leistungsmodus der Basisstation basiert.

9. Basisstation (10), umfassend eine Steuereinheit (101), die so ausgelegt ist, dass sie eine Zellauslastung in einer mit der Basisstation (10) verbundenen ersten lokalen Zelle bestimmt, die Benutzereinrichtungsaktivität innerhalb der ersten lokalen Zelle anzeigt, **gekennzeichnet durch** Umfassen einer Netzschnittstelle (103), die so ausgelegt ist, dass sie Zellauslastungsinformationen von einer Kommunikationsvorrichtung empfängt, die eine Anzeige von Benutzereinrichtungsaktivität innerhalb einer zweiten Zelle umfassen, die mit der Kommunikationsvorrichtung verbunden ist, wobei die Steuereinheit (101) ferner so ausgelegt ist, dass sie einen Leistungsmodus, in den die Basisstation (10) eintreten soll, wobei die Basisstation (10) die erste lokale Zelle versorgt, basierend auf den empfangenen Zellauslastungsinformationen und der bestimmten Auslastung in der ersten lokalen Zelle bestimmt.

10. Basisstation (10) nach Anspruch 9, wobei die Steuereinheit (101) ferner so ausgelegt ist, dass sie, um den Leistungsmodus zu bestimmen, in den eingetreten werden soll, einen Auslastungswert basierend auf den empfangenen Zellauslastungsinformationen und der bestimmten Auslastung in der ersten lokalen Zelle bestimmt, wobei verschiedene Bereiche des Auslastungswerts verschiedene Leistungsmodi in einer Liste definieren, die in einer Speichereinheit (107) gespeichert ist.

11. Basisstation (10) nach einem der Ansprüche 9 bis 10, wobei die Anzeige umfasst: Anzahl von gegenwärtig aktiven Benutzereinrichtungen, Typen von Diensten, die verwendet werden, Gesamtmenge von Daten, die während eines bestimmten Zeitfensters gesendet werden, Aufenthaltsorte von Benutzereinrichtungen, Anzahl von Direktzugriffsvorgängen während eines bestimmten Zeitfensters, Anzahl von Nicht-Zugriffsschicht-Signalisierungsnachrichten, die während eines bestimmten Zeitfensters durch die Zelle laufen, Endgerätetyp von Benutzereinrichtungen, Bewegungs- und Richtungsinformationen von Benutzereinrichtungen, Leistungsmodus einer Basisstation, welche die zweite Zelle versorgt, basierend auf UE-Aktivität innerhalb der zweiten Zelle und/oder dergleichen.

12. Basisstation (10) nach einem der Ansprüche 9 bis 11, wobei die Steuereinheit (101) ferner so ausgelegt ist, dass sie, um den Leistungsmodus zu bestimmen, in den eingetreten werden soll, andere Informationen, wie beispielsweise Handover-Statistiken und/oder dergleichen, gewichtet.

13. Basisstation (10) nach einem der Ansprüche 9 bis 12, wobei die erste lokale Zelle und die zweite Zelle verschiedene Funkzugangstechnologien umfassen.

14. Basisstation (10) nach einem der Ansprüche 9 bis 13, wobei die Steuereinheit (101) ferner so ausgelegt ist, dass sie einen Hilfsleistungsmodusbefehl erstellt und an die Basisstation unterstützende Hilfseinrichtungen sendet, der einen auf dem bestimmten Leistungsmodus basierenden Hilfsleistungsmodus angibt, in den eingetreten werden soll.

15. Basisstation (10) nach einem der Ansprüche 9 bis 13, wobei die Steuereinheit (101) ferner so ausgelegt ist, dass sie in den bestimmten Leistungsmodus eintritt, wobei verschiedene Teile in der Basisstation gemäß dem bestimmten Leistungsmodus ein-/ausgeschaltet werden und Einstellungen der verschiedene Leistungsmodi in einer Speichereinheit (107) gespeichert werden.

16. Basisstation (10) nach einem der Ansprüche 9 bis 15, wobei die Basisstation ein eNodeB und/oder dergleichen ist.

17. Basisstation (10) nach einem der Ansprüche 9 bis 16, wobei die erste Netzschnittstelle (103), eine X2-, lur-, Abis-Schnittstelle und/oder dergleichen umfasst.

18. Basisstation (10) nach einem der Ansprüche 9 bis 17, wobei die Steuereinheit (101) ferner so ausgelegt ist, dass sie die Zellauslastungsinformationen von der zweiten Kommunikationsvorrichtung über die erste Netzschnittstelle (103) anfordert.

## Revendications

1. Procédé dans une station de base (10) pour déterminer un mode de puissance dans lequel faire entrer la station de base (10), comprenant les étapes suivantes
- la détermination (82) d'une charge de cellule indiquant une activité d'équipements utilisateurs à l'intérieur d'une première cellule locale de la station de base (10), **caractérisé par**
- la réception (86) d'informations de charge de cellule à partir d'un dispositif de communication comprenant une indication de l'activité d'équipements utilisateurs à l'intérieur d'une deuxième cellule associée au dispositif de communication, et
- la détermination (88) du mode de puissance dans lequel faire entrer la station de base (10) basée sur les informations de charge de cellule reçues et la charge déterminée dans la première cellule locale.

2. Procédé selon la revendication 1, dans lequel l'étape de détermination d'un mode de puissance comprend la détermination d'une valeur de charge basée sur les informations de charge de cellule reçues de la deuxième cellule et la charge déterminée dans la première cellule locale, dans lequel des plages différentes de la valeur de charge sont liées à des modes de puissance différents.

3. Procédé selon l'une quelconque des revendications 1 à 2, dans lequel l'indication comprend ;
un nombre d'équipements utilisateurs actuellement actifs, des types de services qui sont utilisés, une quantité totale de données qui sont transmises durant une certaine fenêtre de temps, des positions d'équipements utilisateurs, un nombre d'opérations d'accès aléatoire durant une certaine fenêtre de temps, un nombre de messages de signalisation de couche de non-accès passant à travers la cellule durant une certaine fenêtre de temps, un type de terminal d'équipements utilisateurs, des informations de mouvement et de direction d'équipements utilisateurs, un mode de puissance d'une station de base desservant la deuxième cellule basée sur une activité d'équipements utilisateurs à l'intérieur de la deuxième cellule, et/ou similaire.

4. Procédé selon l'une quelconque des revendications 1 à 3, dans lequel l'étape de détermination d'un mode de puissance comprend en outre la pondération d'autres informations telles que des statistiques de transfert entre cellules et/ou similaire.

5. Procédé selon l'une quelconque des revendications 1 à 4, dans lequel la première cellule locale et la deuxième cellule comprennent des technologies d'accès radio différentes.

6. Procédé selon l'une quelconque des revendications 1 à 5, comprenant en outre l'étape de demande (84) des informations de charge de cellule à partir du dispositif de communication.

7. Procédé selon l'une quelconque des revendications 1 à 6, comprenant en outre l'étape de passage (94) dans le mode de puissance déterminé.

8. Procédé selon la revendication 1-7, dans lequel la station de base crée et transmet des ordres de mode de puissance auxiliaire à des équipements auxiliaires supportant la station de base, dans lequel l'ordre de mode de puissance auxiliaire est basé sur le mode de puissance déterminé de la station de base.

9. Station de base (10) comprenant une unité de commande (101) agencée pour déterminer une charge de cellule dans une première cellule locale associée à la station de base (10), indiquant une activité d'équipements utilisateurs à l'intérieur de la première cellule locale, **caractérisée en ce qu'**elle comprend une interface de réseau (103) agencée pour recevoir des informations de charge de cellule à partir d'un dispositif de communication comprenant une indication de l'activité d'équipements utilisateurs à l'intérieur d'une deuxième cellule associée au dispositif de communication, dans laquelle l'unité de commande (101) est agencée en outre pour déterminer un mode de puissance dans lequel faire entrer la station de base (10), la station de base (10) desservant la première cellule locale, basé sur les informations de charge de cellule reçues et la charge déterminée dans la première cellule locale.

10. Station de base (10) selon la revendication 9, dans laquelle l'unité de commande (101) est agencée en outre, de manière à déterminer le mode de puissance dans lequel entrer, pour déterminer une valeur de charge basée sur les informations de cellule reçues et de la charge déterminée dans la première cellule locale, dans laquelle des plages différentes de la valeur de charge définissent des modes de puissance différents dans une liste stockée dans une unité de mémoire (107).

11. Station de base (10) selon l'une quelconque des revendications 9 à 10, dans laquelle l'indication comprend ; un nombre d'équipements utilisateurs actuellement actifs, des types de services qui sont utilisés, une quantité totale de données qui sont transmises durant une certaine fenêtre de temps, des positions d'équipements utilisateurs, un nombre d'opérations d'accès aléatoire durant une certaine fenêtre de temps, un nombre de messages de signalisation de couche de non-accès passant à travers la cellule durant une certaine fenêtre de temps, un type de terminal d'équipements utilisateurs, des informations de mouvement et de direction d'équipements utilisateurs, un mode de puissance d'une station de base desservant la deuxième cellule basée sur une activité d'équipements utilisateurs à l'intérieur de la deuxième cellule, et/ou similaire.

12. Station de base (10) selon l'une quelconque des revendications 9 à 11, dans laquelle l'unité de commande (101) est agencée en outre, de manière à déterminer le mode de puissance dans lequel entrer, pour pondérer d'autres informations, telles que des statistiques de transfert entre cellules, et/ou similaire.

13. Station de base (10) selon l'une quelconque des revendications 9 à 12, dans laquelle la première cellule et la deuxième cellule comprennent des technologies d'accès radio différentes.

14. Station de base (10) selon l'une quelconque des revendications 9 à 13, dans laquelle l'unité de commande (101) est agencée en outre pour créer et transmettre un ordre de mode de puissance auxiliaire à des équipements auxiliaires supportant la station de base, indiquant un mode de puissance auxiliaire dans lequel entrer, basé sur le mode de puissance déterminé.

15. Station de base (10) selon l'une quelconque des revendications 9 à 14, dans laquelle l'unité de commande (101) est agencée en outre pour entrer dans le mode de puissance déterminé, activer/désactiver différentes parties dans la station de base en fonction du mode de puissance déterminé, les paramètres des différents modes de puissance sont stockés dans une unité de mémoire (107).

16. Station de base (10) selon l'une quelconque des revendications 9 à 15, dans laquelle la station de base est un eNodeB, et/ou similaire.

17. Station de base (10) selon l'une quelconque des revendications 9 à 16, dans laquelle la première interface de réseau (103) comprend une interface X2, Iur, Abis et/ou similaire.

18. Station de base (10) selon l'une quelconque des revendications 9 à 17, dans laquelle l'unité de commande (101) est agencée en outre pour demander les informations de charge de cellule à partir du deuxième dispositif de communication sur la première interface de réseau (103).
